# EUROPEAN PATENT SPECIFICATION

(11) **EP 4 187 255 B1**
(45) Date of publication and mention of the grant of the patent: **12.08.2026**
(21) Application number: 21844618.5
(22) Date of filing: 12.02.2021
(51) Int. Cl.: G01N 35/10

(54) **AUTOMATED ANALYZER**
AUTOMATISCHER ANALYSATOR
ANALYSEUR AUTOMATISÉ

(30) Priority: 22.07.2020 JP 2020124999
(43) Date of publication of application: 31.05.2023
(73) Proprietor: HITACHI HIGH-TECH CORPORATION, Tokyo 105-6409 (JP)
(72) Inventor: OKABE, Shugo, Tokyo 105-6409 (JP); OKUSA, Takenori, Tokyo 105-6409 (JP)
(74) Representative: MERH-IP Matias Erny Reichl Hoffmann Patentanwälte PartG mbB
(86) International application number: PCT/JP2021/005309
(87) International publication number: WO 2022/018895

(56) References cited:
- JP-A- 2005 241 442
- JP-A- 2011 021 993
- JP-A- 2012 167 998
- JP-A- H05 126 836
- JP-A- H05 126 836
- JP-A- H11 271 321
- US-A1- 2019 041 414

## Description

### Technical Field

The invention relates to an automatic analyzer.

### Background Art

An automatic analyzer is a device that reacts a specimen such as blood and urine with a reagent to automatically perform a quantitative analysis or a qualitative analysis. The specimen and the reagent are dispensed by a dispensing nozzle from a specimen container and a reagent container to a reaction container for analysis. The dispensing nozzles are provided respectively for specimens and for reagents; and they are repeatedly used for various specimens and reagents, therefore cleaned with washing water and dried by blowing the compressed air after each dispensation and kept in a clean state. When the compressed air is blown after the washing, however, the washing water remaining in the dispensing nozzle may be scattered within the automatic analyzer.

Patent Literature 1 discloses an automatic analyzer in which a lower opening for discharging the washing water is made wider than an upper opening for passing the dispensing nozzles in a washing tank where the washing water and the compressed air are sprayed to the dispensing nozzles, in order to wash and dry the dispensing nozzles without scattering the washing water.

In addition, in Patent Literature 2 equally an automatic analyzer for analyzing components contained in a test sample, particularly chemical components contained in blood, urine and the like, and a probe cleaning mechanism used therefor is disclosed, while the above-mentioned Patent Literature 2 specifically focuses on improving the probe moving and cleaning time, predominantly by allowing an integrated cleaning mechanism to move in conjunction with a probe integrated into the automatic analyzer.

Furthermore, Patent Literature 3 discloses a mechanism for shortening the washing process time within an probe washing tank, which is mainly based on a centrally increasing height geometry included in a reaction tank while also a drain port of about 3-times in size is provided at the washing tank.

### Citation List

### Patent Literature

Patent Literature **1:** Japanese Patent Laid-Open No. 2013-134142
Patent Literature 2: Japanese Published Patent Application No. 2011-021993 A
Patent Literature 3: Japanese Published Patent Application No. H05-126836

### Summary of Invention

### Technical Problem

In the Patent Literature 1, however, the dispensing nozzles have to be vertically moved in the washing tank to be washed and dried. To vertically move the dispensing nozzles, it is necessary to switch a moving direction of the dispensing nozzles between a horizontal direction and a vertical direction, which requires time for the washing and drying process.

Therefore, it is an object of the invention to provide an automatic analyzer that can wash the dispensing nozzles without vertically moving the same in the washing tank.

### Solution of Problem

In order to achieve the above object, the invention is an automatic analyzer according to claim 1 including a dispensing nozzle which dispenses a specimen or a reagent and a nozzle washing tank which washes the dispensing nozzle, in which the nozzle washing tank includes a spraying portion spraying washing water to the dispensing nozzle and an opening for taking the dispensing nozzle in and out, and the opening is provided along a track in a horizontal plane of the dispensing nozzle on a side surface of the nozzle washing tank. The nozzle washing tank is provided at a position higher than a position where the spraying portion sprays the washing water. The automatic analyzer is characterized in that it is provided with a roof for covering the both sides of the track. A bottom surface of the roof is inclined with a side closer to the track higher than another side distant from the track.

### Advantageous Effects of Invention

According to the invention, it is possible to provide an automatic analyzer capable of washing a dispensing nozzle without vertically moving the same in the washing tank.

### Brief Description of Drawings

[FIG. 1] FIG. 1 is a plan view illustrating a configuration example of an automatic analyzer.
[FIG. 2] FIG. 2 is a side view illustrating an example of a reagent dispensing unit.
[FIG. 3] FIG. 3 is a plan view illustrating an example of the disposition of the reagent dispensing unit.
[FIG. 4A] FIG. 4A is a plan view illustrating an example of a nozzle washing tank.
[FIG. 4B] FIG. 4B is a side view illustrating an example of the nozzle washing tank.
[FIG. 5A] FIG. 5A is a diagram illustrating an example of the nozzle washing tank taken along a line A-A illustrated in FIG. 4A.
[FIG. 5B] FIG. 5B is a diagram illustrating another example of the nozzle washing tank taken along the line A-A illustrated in FIG. 4A.
[FIG. 6A] FIG. 6A is a plan view illustrating a modification example of a spraying portion.
[FIG. 6B] FIG. 6B is a diagram illustrating a modification example of the spraying portion taken along a line E-E illustrated in FIG. 6A.

### Description of Embodiments

Hereinafter, a preferred embodiment of an automatic analyzer according to the invention will be described referring to the attached drawings. The automatic analyzer is a device that analyzes a specimen with a reaction liquid having the specimen reacted with a reagent; for example, it includes a biochemical automatic analyzer, an immunological automatic analyzer, an automatic genetic analyzer, and the like. Further, it includes a mass spectrometer used for a clinical examination, a coagulation analyzer for measuring the coagulation time of blood, and the like. Moreover, the invention can be applied to a composite system of a mass spectrometer, a coagulation analyzer, and the like, and a biochemical automatic analyzer, an immunological automatic analyzer, and the like, or an automatic analysis system with these applied there.

### First Embodiment

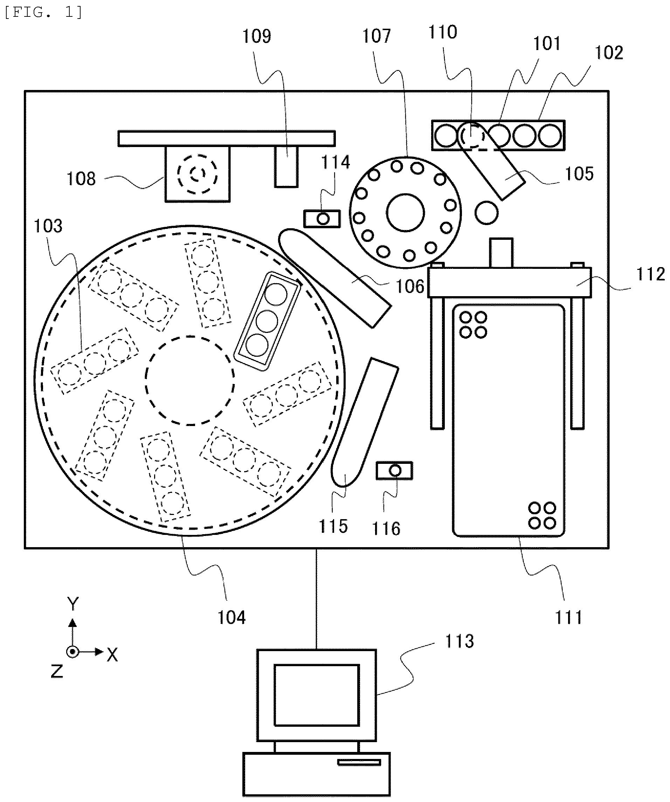

One example of the whole structure of an automatic analyzer of this embodiment will be described using **Fig. 1****.** The automatic analyzer includes a specimen conveyance unit 102, a reagent storage 104, a specimen dispensing unit 105, a reagent dispensing unit 106, a reaction accelerator 107, a measurement portion 108, and a control unit 113. Hereinafter, each unit will be described. Here, the vertical direction is defined as Z direction and the horizontal plane is defined as XY plane.

The specimen conveyance unit 102 conveys a specimen container 101 containing a specimen such as blood or urine to a specimen aspiration position 110. The reagent storage 104 stores a reagent container 103 containing a reagent used for analysis within a predetermined range of temperature.

The specimen dispensing unit 105 dispenses a specimen from the specimen container 101 conveyed to the specimen aspiration position 110 to a reaction container arranged in the reaction accelerator 107. The reaction containers with the specimens dispensed and dispensing tips used in dispensing the specimen are stored in an expendable item storage portion 111 and conveyed to a predetermined position by an expendable item conveyance unit 112.

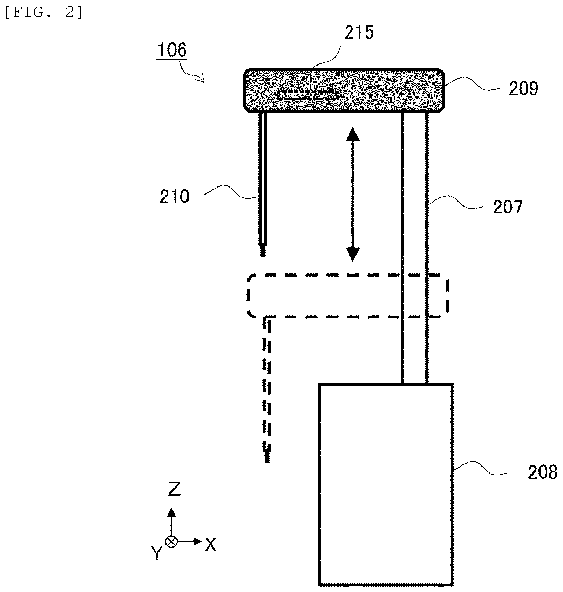

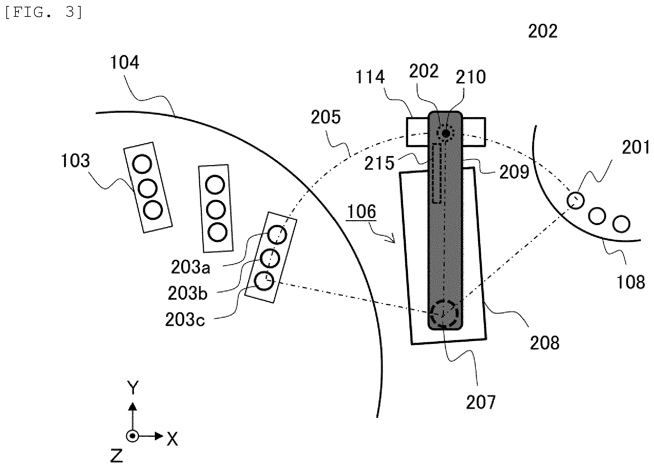

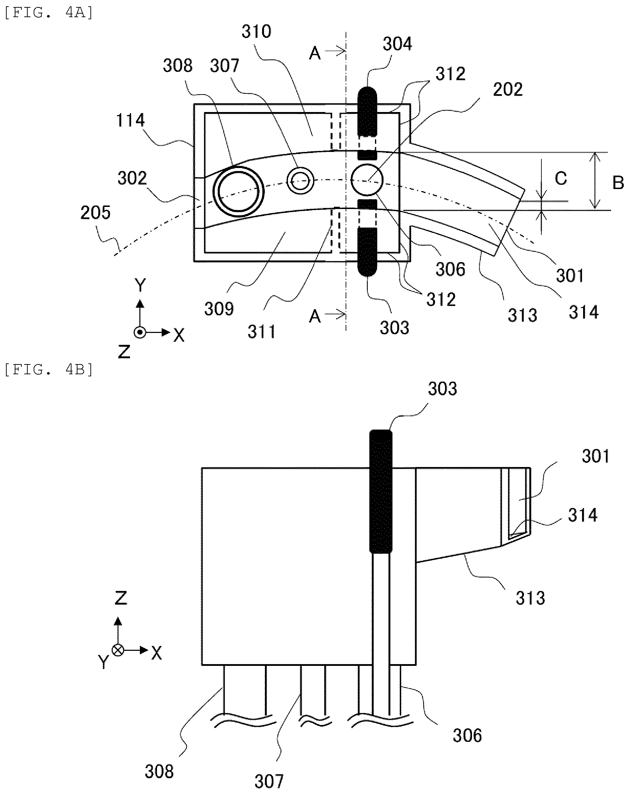

The reagent dispensing unit 106 dispenses a reagent from the reagent container 103 stored in the reagent storage 104 to the reaction container with the specimen dispensed which is arranged in the reaction accelerator 107. After dispensing the reagent, the reagent dispensing unit 106 is washed in a nozzle washing tank 114. The details of the reagent dispensing unit 106 will be described later using Figs. 2 and 3. Further, the details of the nozzle washing tank 114 will be described later using Figs. 4A and 4B. When the reagent within the reagent container 103 contains a magnetic bead and the like, a stirring portion 115 having a stirring paddle at its distal end stirs the reagent prior to the dispensation of the reagent. The stirring portion 115 is washed in a paddle washing tank 116 after stirring the reagent.

The reaction accelerator 107 creates a reaction liquid by keeping the reaction container containing the specimen and the reagent in a predetermined temperature range to accelerate the reaction of the specimen and the reagent within the reaction container. When the reaction accelerator 107 is formed in a disk shape, it shifts the reaction container to the position where the specimen dispensing unit 105 discharges the specimen and the position where the reagent dispensing unit 106 discharges the reagent, by rotating with the central axis of the disk as a rotation axis. The reaction container containing the reaction liquid is conveyed by a reaction container conveyance unit 109 from the reaction accelerator 107 to the measurement portion 108.

The measurement portion 108 optically and electrically measures the reaction liquid within the reaction container conveyed by the reaction container conveyance unit 109. It measures, for example, absorbance of the reaction liquid, amount of luminescence when a voltage is applied to the reaction liquid with the reagent added, particle number within the reaction liquid, fluctuation of the current value and voltage value when the reaction liquid is in contact with an electrode film, and the like. Measurement instruments such as a photomultiplier tube and a photometer are used to measure the absorbance and the amount of luminescence, an imaging device such as a CCD camera or the like is used to measure the particle number, and an ammeter and a voltmeter are respectively used to measure a fluctuation and the like in the current value and the voltage value.

The control unit 113 is a device for controlling each unit included in the automatic analyzer, for example, formed by a computer. Input and output devices are connected to the control unit 113; for example, data necessary for analysis is input through an input device such as a keyboard, a mouse, a touch panel, and the like, and analysis result is output to an output device such as a liquid crystal display, a touch panel, and the like.

One example of the reagent dispensing unit 106 will be described using Fig. 2. The reagent dispensing unit 106 includes a driving portion 208, a shaft 207, an arm 209, and a dispensing nozzle 210.

The driving portion 208 has a driving source such as a motor and the like to vertically move the shaft 207 connected to the driving portion 208 in the Z axis direction and rotate the above around the Z axis. The shaft 207 is a cylindrical bar with its upper end connected to one end of the arm 209. The arm 209 is a member for joining the shaft 207 and the dispensing nozzle 210, with its one end connected to the shaft 207 and the other end connected to the dispensing nozzle 210.

The dispensing nozzle 210 is a fine tube of aspirating and discharging a reagent. The dispensing nozzle 210 is connected to the shaft 207 via the arm 209, vertically moves together with the shaft 207 moved up and down by the driving portion 208, and moves to draw a circular arc track on the XY surface as the horizontal surface together with the rotation of the shaft 207.

The arm 209 houses a liquid level sensor 215 of detecting a liquid level which comes in contact with the distal end of the dispensing nozzle 210. Based on the detected signal of the liquid level sensor 215, the stopping position of the dispensing nozzle 210 in the vertical movement is determined and the liquid amount within the reagent container 103 is measured. Further, the arm 209 is desired to be shortened in the length to increase its rigidity, for the purpose of suppressing the displacement of the distal end of the dispensing nozzle 210. The shorter arm 209 can speed up the operation because of the lightweight reagent dispensing unit 106 and also reduce the occupation space during the operation.

One example of the arrangement of the reagent dispensing unit 106 will be described using Fig. 3. As mentioned above, the dispensing nozzle 210 of the reagent dispensing unit 106 draws a nozzle track 205 as the circular arc track shown by a dotted line, according to the rotation of the shaft 207 driven by the driving portion 208.

Since the dispensing nozzle 210 aspirates and discharges the reagent in the nozzle track 20, the reagent dispensing unit 106 is arranged so that the nozzle track 205 may overlap with reagent aspiration ports 203a to 203c where the reagent is aspirated and reagent discharge position 201 where the reagent is discharged. Further, the reagent dispensing unit 106 is desired to be arranged between the reaction accelerator 107 and the reagent storage 104, to shorten the moving distance of the dispensing nozzle 210. Further, the nozzle washing tank 114 is arranged so that a nozzle washing position 202 where the dispensing nozzle 210 is washed may overlap with the nozzle track 205. The nozzle washing tank 114 is also desired to be arranged between the reaction accelerator 107 and the reagent storage 104, to shorten the moving distance of the dispensing nozzle 210.

One example of the nozzle washing tank 114 will be described using Figs. 4A and 4B. The nozzle washing tank 114 includes a first opening 301, a second opening 302, a first spraying portion 303, and a second spraying portion 304.

The first opening 301 and the second opening 302 are openings for the dispensing nozzle 210 to come in and out the nozzle washing tank 114 when the above nozzle shifts along the nozzle track 205, which openings are provided on the side surface of the nozzle washing tank 114. The first opening 301 and the second opening 302 as the openings for the dispensing nozzle 210 coming in and out are provided along the nozzle track 205 that is the track on the horizontal surface of the dispensing nozzle 210.

The first spraying portion 303 and the second spraying portion 304 spray the washing water used for washing the dispensing nozzle 210 toward the nozzle washing position 202. The washing water used for washing the dispensing nozzle 210 is discharged through a drain pipe 306 to the outside of the automatic analyzer. The first spraying portion 303 and the second spraying portion 304 are desired to be arranged opposite with each other. By oppositely arranging the first spraying portion 303 and the second spraying portion 304, the washing water is sprayed simultaneously at the both side surfaces of the cylindrical-shaped dispensing nozzle 210, to wash the whole outer wall of the dispensing nozzle 210.

The first spraying portion 303 and the second spraying portion 304 may always continue spraying the washing water or it may spray the washing water when the dispensing nozzle 210 arrives at the nozzle washing position 202. When the above portions continue spraying the washing water, the dispensing nozzle 210 can be washed without stopping at the nozzle washing position 202, hence to shorten the washing process. When they spray the washing water when the dispensing nozzle 210 arrives at the nozzle washing position 202, the dispensing nozzle 210 has to be stopped at the nozzle washing position 202; however, the washing water can be saved.

Further, it is desired that a difference between the water pressure sprayed by the first spraying portion 303 and that one sprayed by the second spraying portion 304 should be smaller. When the water pressure difference is remarkably large, water drop remains easily more on the side of lower water pressure, while when the water pressure difference is small, the water drop remaining on the washed dispensing nozzle 210 can be reduced. Therefore, in the case of washing the dispensing nozzle 210 without stopping the same at the nozzle washing position 202, the washing water is desired to be sprayed from a direction orthogonal to the nozzle track 205. Here, to reduce the remaining water drop further, the outer surface of the dispensing nozzle 210 may be made water repellent.

The washing water sprayed to the dispensing nozzle 210 may be scattered from the nozzle washing tank 114. Since the scattered washing water contains the reagent and the like, the scattered water drop contaminates the automatic analyzer, causing ill effects on the analytical results. Therefore, to suppress the scattering of the washing water, an extending portion 31 is provided for making the position of the first opening 301 and the second opening 302 distant from the first spraying portion 303 and the second spraying portion 304, and a first roof 309 and a second roof 310 for covering the both sides of the nozzle track 205.

The extending portion 313 will be described using Figs. 4A and 4B. The extending portion 313 is a wall surface extending along the nozzle track 205 to make the first opening 301 distant from the first spraying portion 303 and the second spraying portion 304. The extension of the extending portion 313 along the nozzle track 205 can make the depth width C from a direction orthogonal to the spraying direction of the washing water, that is, the X axis direction in Fig. 4A narrower than the width B of the opening for passing the dispensing nozzle 210. Since the depth width C is narrower than the width B of the opening, it is possible to suppress the water drop scattering linearly from the nozzle washing position 202 in the X axis direction. The depth width C gets narrower according as the diameter of the nozzle track 205 gets shorter, and since the diameter of the nozzle track 205 depends on the arrangement of the reaction accelerator 107, the reagent storage 104, and the reagent dispensing unit 106, the arrangement of the above three is desired to be set to shorten the diameter of the nozzle track 205.

The bottom face 314 of the extending portion 313 is an inclined surface inclining toward the nozzle washing tank 114. The inclined bottom face 314 makes the water drop scattered in the extending portion 313 flow toward the nozzle washing tank 114 and run out through the drain pipe 306. The extending portion 313 illustrated in Figs. 4A and 4B may be provided not only on the side of the first opening 301 but also on the side of the second opening 302.

Further, the width of the extending portion 313 corresponding to the width B of the opening is desired to be narrower than the width or the length in the Y direction of the nozzle washing tank 114. The narrower width of the extending portion 313 than that of the nozzle washing tank 114 makes the washing water difficult to scatter to the outside of the nozzle washing tank 114.

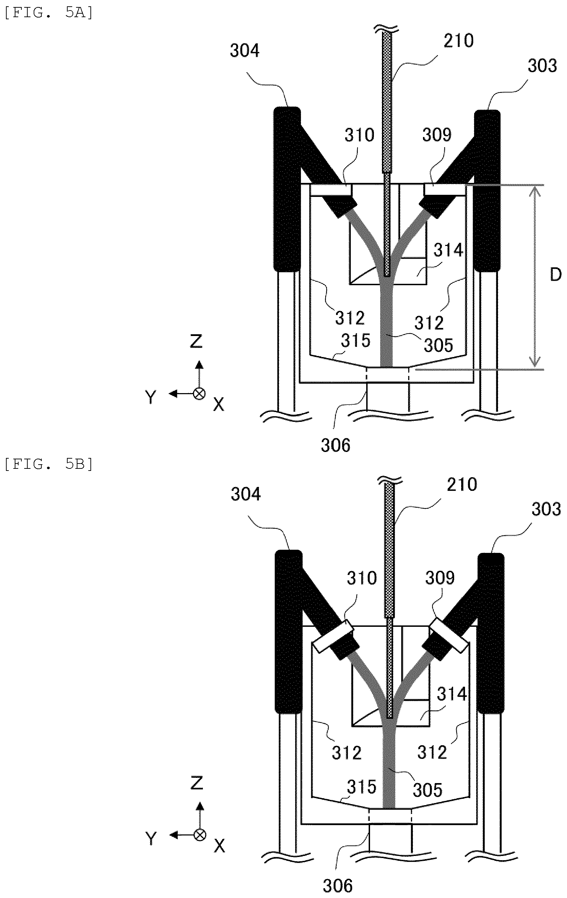

One example of the first roof 309 and the second roof 310 will be described using Fig. 5A. The first roof 309 and the second roof 310 are provided at a higher position than the position where the first spraying portion 303 and the second spraying portion 304 spray the washing water 305. The first roof 309 and the second roof 310 provided on the both sides of the nozzle track 205 at a higher position than the position of spraying the washing water 305 can suppress the scattering of the washing water 305 sprayed to the dispensing nozzle 210.

The distance D from the first roof 309 or the second roof 310 to the bottom 315 is desired longer. The longer the distance D is, the more difficult it is to scatter the water drop jumping up from the bottom 315 to the outside of the nozzle washing tank 114. Further, the bottom 315 is desired to be inclined toward the drain pipe 306. The inclined bottom 315 makes the used washing water remaining in the bottom 315 flow to the drain pipe 306 without stagnation, hence to suppress the jumping up of the washing water remaining in the bottom 315.

Another example of the first roof 309 and the second roof 310 will be described using Fig. 5B. Each of the bottom surfaces of the first roof 309 and the second roof 310 illustrated in Fig. 5B is an inclined surface with one side closer to the nozzle track 205 higher than the other side distant from the nozzle track 205. The water drop attached to the bottom surfaces of the first roof 309 and the second roof 310 flows to the side of the inner wall 312 of the nozzle washing tank 114 along the inclined surfaces, not to pollute the washed dispensing nozzle 210.

Here, the first roof 309 and the second roof 310 illustrated in Figs. 5A and 5B are provided not to cover the nozzle track 205 as illustrated in Fig. 4A, therefore not to disturb the horizontal movement of the dispensing nozzle 210. Further, the nozzle washing tank 114 may be provided with an inner wall washing portion 307 and a nozzle retreat portion 308. Here, the inner wall washing portion 307 and the nozzle retreat portion 308 are desired to be isolated from the first spraying portion 303 and the second spraying portion 304 by a partition wall 311. Isolation by the partition wall 311 makes it possible to keep the inner wall washing portion 307 and the nozzle retreat portion 308 clean without any scattered water drop.

The inner wall washing portion 307 is a container where a reagent for washing the inner wall of the dispensing nozzle 210 is gushed. In the inner wall washing portion 307, the dispensing nozzle 210 with its distal end soaked with the gushed reagent aspirates a predetermined amount of reagent. The dispensing nozzle 210 with the reagent aspirated discharges the reagent to the drain pipe 306, to complete washing the inner wall of the dispensing nozzle 210.

The nozzle retreat portion 308 is a pipe where the dispensing nozzle 210 is housed at a maintenance of the automatic analyzer. Since the dispensing nozzle 210 is housed in the nozzle retreat portion 308, it is possible to inhibit a system user or a service man from touching the dispensing nozzle 210 by mistake and damaging the same.

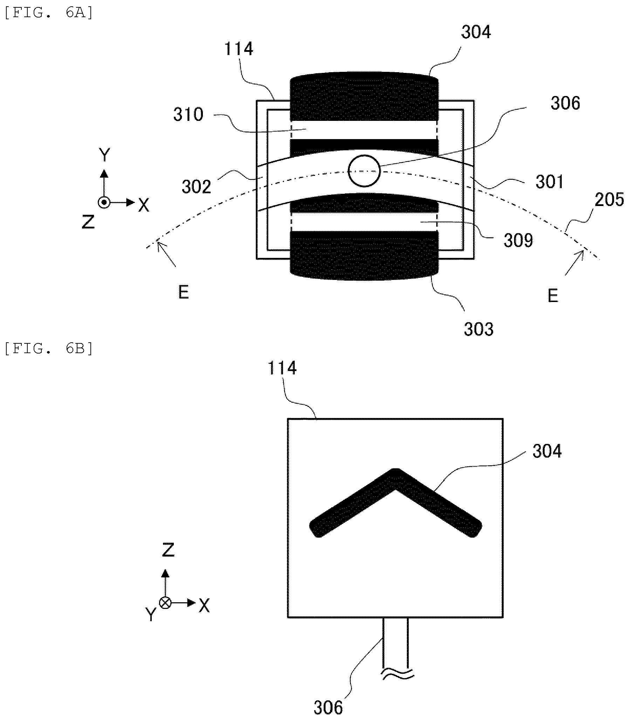

A variation example of the first spraying portion 303 and the second spraying portion 304 will be described using Figs. 6A and 6B. The first spraying portion 303 and the second spraying portion 304 illustrated in Figs. 6A and 6B spray the washing water widely to the direction of the nozzle track 205. Specifically, the first spraying portion 303 and the second spraying portion 304 are designed in that a plurality of injection ports are aligned in the direction of the nozzle track 205, that is, the horizontal direction and that the injection port has a shape having a width in the horizontal direction larger than a width in the vertical direction. The washing water is sprayed widely to the direction of the nozzle track 205, which can wash the dispensing nozzle 210 moving in the horizontal direction more efficiently. Here, to reduce a difference of the water pressures on the both sides of the dispensing nozzle 210, the washing water is desired to be sprayed from a direction orthogonal to the nozzle track 205.

Further, the first spraying portion 303 and the second spraying portion 304 may be designed to spray the washing water to a lower position according as the dispensing nozzle 210 comes closer to the first opening 301 or the second opening 302. Specifically, as illustrated in Fig. 6B, the position of the injection port is the highest in a central portion that is the most distant from the first opening 301 and the second opening 302, and the position of the injection port is lowered according as it is closer to the first opening 301 or the second opening 302. In the arrangement of the injection portion illustrated in Fig. 6B, even when the dispensing nozzle 210 moves from the first opening 301 to the second opening 302, or even when it moves in an inverse direction, the washing water is sprayed to a lower position according as the nozzle comes closer to an outlet of the dispensing nozzle 210.

Here, when the moving direction of the dispensing nozzle 210 is restricted to one direction from the first opening 301 to the second opening 302, the position of the injection port on the side of the first opening 301 may be the highest and the position of the injection portion may be lowered according to the nozzle comes closer to the second opening 302. Alternatively, how to lower the position of the injection port is not restricted to a linearly track as illustrated in Fig. 6B, but the injection port may be designed to draw a curved track, for example, an arc shaped track having upward convex.

According as the dispensing nozzle 210 approaches the first opening 301 or the second opening 302, the washing water is sprayed to a lower position, which can wash the dispensing nozzle 210 moving in the horizontal direction more efficiently and shorten the time for drying the dispensing nozzle 210.

As set forth hereinabove, the embodiment of the invention has been described. The invention is not restricted to the above embodiment but the components may be modified without departing from the general subject matter of the invention, which is defined by the claims.

### Reference Signs List

- 101:: specimen container
- 102:: specimen conveyance unit
- 103:: reagent container
- 104:: reagent storage
- 105:: specimen dispensing unit
- 106:: reagent dispensing unit
- 107:: reaction accelerator
- 108:: measurement portion
- 109:: reaction container conveyance unit
- 110:: specimen aspiration position
- 111:: expendable item storage portion
- 112:: expendable item conveyance unit
- 113:: control unit
- 114:: nozzle washing tank
- 115:: stirring portion
- 116:: paddle washing tank
- 201:: reagent discharge position
- 202:: nozzle washing position
- 203a-203c:: reagent aspiration port
- 205:: nozzle track
- 207:: shaft
- 208:: driving portion
- 209:: arm
- 210:: dispensing nozzle
- 215:: liquid level sensor
- 301:: first opening
- 302:: second opening
- 303:: first spraying portion
- 304:: second spraying portion
- 305:: washing water
- 306:: drain pipe
- 307:: inner wall washing portion
- 308:: nozzle retreat portion
- 309:: first roof
- 310:: second roof
- 311:: partition wall
- 312:: inner wall
- 313:: extending portion
- 314:: bottom face
- 315:: bottom

## Claims

1. An automatic analyzer comprising:
a dispensing nozzle (210) which dispenses a specimen or a reagent; and
a nozzle washing tank (114) which washes the dispensing nozzle (210), wherein
the nozzle washing tank (114) includes a spraying portion spraying washing water to the dispensing nozzle (210) and an opening for taking the dispensing nozzle (210) in and out,
the opening is provided along a track (205) in a horizontal plane of the dispensing nozzle (210) on a side surface of the nozzle washing tank (114),
wherein
the nozzle washing tank (114) is provided at a position higher than a position where the spraying portion sprays the washing water,
the automatic analyzer being further **characterized in that** it is provided provided with a roof for covering the both sides of the track (205) wherein
a bottom surface of the roof is inclined with a side closer to the track (205) higher than another side distant from the track (205).

2. The automatic analyzer according to claim 1, wherein
the opening is also provided with an extending portion (313) of extending along the track (205), and
a bottom surface (314) of the extending portion (313) is inclined toward the nozzle washing tank (114).

3. The automatic analyzer according to claim 2, wherein
a width of the extending portion (313) is narrower than a width of the nozzle washing tank (114).

4. The automatic analyzer according to claim 1, wherein
the spraying portion sprays the washing water from a direction orthogonal to the track (205) to a direction of the track (205) and also sprays the washing water to a lower position according as the dispensing nozzle (210) approaches the opening.

5. The automatic analyzer according to claim 1, wherein
the track (205) has an arc shape.

6. The automatic analyzer according to claim 1, wherein
the nozzle washing tank (114) has a bottom portion inclined toward a drain pipe (306) for discharging the washing water.

## Patentansprüche

1. Automatischer Analysator, der umfasst:
eine Ausgabedüse (210), die eine Probe oder ein Reagenz ausgibt; und
einen Düsenwaschtank (114), der die Ausgabedüse (210) wäscht, wobei
der Düsenwaschtank (114) einen Sprühteil, der Waschwasser auf die Ausgabedüse (210) sprüht, und eine Öffnung, um die Ausgabedüse (210) aufzunehmen und herauszunehmen, enthält,
wobei die Öffnung entlang einer Bahn (205) in einer horizontalen Ebene der Ausgabedüse (210) auf einer Seitenfläche des Düsenwaschtanks (114) vorgesehen ist,
wobei
der Düsenwaschtank (114) an einer Position vorgesehen ist, die höher als eine Position ist, wo der Sprühteil das Waschwasser sprüht,
wobei der automatische Analysator ferner **dadurch gekennzeichnet ist, dass** er mit einem Dach ausgestattet ist, um beide Seiten der Bahn (205) zu bedecken, wobei
eine untere Fläche des Dachs geneigt ist, wobei eine Seite, die näher an der Bahn (205) ist, höher als eine andere Seite ist, die von der Bahn (205) entfernt ist.

2. Automatischer Analysator nach Anspruch 1, wobei
die Öffnung außerdem mit einem Verlängerungsteil (313), der sich entlang der Bahn (205) erstreckt, ausgestattet ist und
eine untere Fläche (314) des Verlängerungsteils (313) in Richtung des Düsenwaschtanks (114) geneigt ist.

3. Automatischer Analysator nach Anspruch 2, wobei
eine Breite des Verlängerungsteils (313) schmaler als eine Breite des Düsenwaschtanks (114) ist.

4. Automatischer Analysator nach Anspruch 1, wobei
der Sprühteil das Waschwasser aus einer Richtung senkrecht zu der Bahn (205) in Richtung der Bahn (205) sprüht und außerdem das Waschwasser entsprechend der Annäherung der Ausgabedüse (210) an die Öffnung zu einer niedrigeren Position sprüht.

5. Automatischer Analysator nach Anspruch 1, wobei
die Bahn (205) eine Bogenform besitzt.

6. Automatischer Analysator nach Anspruch 1, wobei
der Düsenwaschtank (114) einen unteren Teil besitzt, der in Richtung einer Ablaufleitung (306) zum Abführen des Waschwassers geneigt ist.

## Revendications

1. Analyseur automatique comprenant :
une buse de distribution (210) qui distribue un prélèvement ou un réactif ; et
un réservoir de lavage de buse (114) qui lave la buse de distribution (210), dans lequel
le réservoir de lavage de buse (114) inclut une portion de pulvérisation qui pulvérise de l'eau de lavage sur la buse de distribution (210) et une ouverture pour faire entrer ou sortir la buse de distribution (210),
l'ouverture est prévue le long d'une piste (205) dans un plan horizontal de la buse de distribution (210) sur une surface latérale du réservoir de lavage de buse (114),
dans lequel le réservoir de lavage de buse (114) est prévu à une position plus haute qu'une position où la portion de pulvérisation pulvérise l'eau de lavage,
l'analyseur automatique étant en outre **caractérisé en ce qu'**il est pourvu d'un toit pour recouvrir les deux côtés de la piste (205), dans lequel
une surface de fond du toit est inclinée avec un côté plus proche de la piste (205) plus haut qu'un autre côté distant de la piste (205).

2. Analyseur automatique selon la revendication 1, dans lequel
l'ouverture est également pourvue d'une portion de prolongement (313) qui s'étend le long de la piste (205), et
une surface de fond (314) de la portion de prolongement (313) est inclinée vers le réservoir de lavage de buse (114).

3. Analyseur automatique selon la revendication 2, dans lequel
une largeur de la portion de prolongement (313) est plus étroite qu'une largeur du réservoir de lavage de buse (114).

4. Analyseur automatique selon la revendication 1, dans lequel
la portion de pulvérisation pulvérise l'eau de lavage depuis une direction orthogonale à la piste (205) jusqu'à une direction de la piste (205) et pulvérise également l'eau de lavage jusqu'à une position inférieure lorsque la buse de distribution (210) se rapproche de l'ouverture.

5. Analyseur automatique selon la revendication 1, dans lequel
la piste (205) a une forme arquée.

6. Analyseur automatique selon la revendication 1, dans lequel
le réservoir de lavage de buse (114) a une portion de fond inclinée vers un tube de drainage (306) pour décharger l'eau de lavage.
